# EUROPÄISCHE PATENTSCHRIFT

(11) **EP 2 985 327 B1**
(45) Veröffentlichungstag und Bekanntmachung des Hinweises auf die Patenterteilung: **15.07.2020**
(21) Anmeldenummer: 14181002.8
(22) Anmeldetag: 14.08.2014
(51) Int. Cl.: C09J 7/10

(54) **Verfahren und Vorrichtung zur Herstellung einer Haftklebeschicht**
Method and device for manufacturing an adhesive layer
Procédé et dispositif de fabrication d'un revêtement auto-adhésif

(43) Veröffentlichungstag der Anmeldung: 17.02.2016
(73) Patentinhaber: Biolink Gesellschaft für Verbindungstechnologien mbH, 83666 Waakirchen (DE)
(72) Erfinder: Dilger, Klaus, 38106 Braunschweig (DE); Hellmanns, Mark, 52146 Würselen (DE); Weber, Marcus, 83627 Osterwarngau (DE); Lindner, Edgar, 83661 Lenggries (DE)
(74) Vertreter: Hoefer & Partner Patentanwälte mbB

(56) Entgegenhaltungen:
- WO-A2-2010/037139
- DE-A1-102010 001 386
- DE-C2- 19 820 366
- US-A- 5 716 687
- US-A1- 2003 232 126
- DATABASE WPI Week 201362 Thomson Scientific, London, GB; AN 2013-H85517 XP002735777, -& CN 102 922 647 A (HON HAI PRECISION IND CO LTD) 13. Februar 2013 (2013-02-13)

## Beschreibung

Die Erfindung betrifft ein Verfahren zur Herstellung einer Haftklebeschicht, eine in dem Verfahren verwendete Vorrichtung und die Verwendung der Haftklebeschicht.

Häufig werden im industriellen Einsatz Haftklebeschichten benötigt, die an die Kontur von den zu verklebenden Bauteilen angepasst sind. Dies tritt beispielsweise bei Gehäuseteilen auf, die miteinander zu verkleben sind und bei denen eine kontinuierlich gleichbleibende Dicke der Klebeschicht gefordert ist.

Derartige Haftklebeschichten werden herkömmlich häufig derart gefertigt, dass der flüssige Klebstoff über eine größere Fläche in einer gleichmäßigen Dicke ausgebracht oder extrudiert und anschließend teilpolymerisiert wird, um nachfolgend aus dem flächigen Halbzeug Stücke mit definierten Maßen zu stanzen. Nachteilig an diesem Vorgehen ist der hohe Anteil von nicht verwendetem Material und die Vielzahl der Bearbeitungsschritte.

Aus DE 198 20 366 C2 ist bekannt, Schablonen für Haftklebeschichten taktweise mit einem Reaktionsmedium zu füllen und anschließend unter Sauerstoff-Abschluss in einer UV-Strecke auszuhärten.

Die US2003/232126 A1 betrifft ein Verfahren zum gleichmäßigen und sicheren Platzieren eines Abstandshalters auf dem Substrat eines Flüssigkristallanzeigeelements, umfassend die Schritte: (a). Herstellung eines UV- oder thermisch härtbaren Harzes, das Abstandsteilchen enthält, (b) Dispergieren einer bestimmten Menge der obigen Spacer-Harz-Mischung auf einem Tiefdruckzylinder mit gut ausgebildeten Zellen, die als Abstand-Harz-Träger verwendet werden sollen, (c) Entfernen von überschüssigem Abstand-HarzGemisch und Aufpressen von Abstandsteilchen mit Harz in jedes Loch mittels eines Rakels, (d) Übertragen von individuellem Abstandhalterharz auf eine zweite Walze mit glatter Oberfläche gemäß dem entworfenen Muster mittels Kontakt. (e) Übertragen eines einzelnen gemusterten Abstandhalterharzes auf die Oberfläche eines Substrats eines Flüssigkristallanzeigeelements von der zweiten Walze mit einem beliebigen herkömmlichen Beschichtungsverfahren.

Die WO2010/037139 A2 betrifft ein Verfahren zum Herstellen einer Schicht aus weichem Klebstoff, wobei das Verfahren umfasst: Bereitstellen eines weichen Klebstoffs; Rollen eines Tiefdruckzylinders auf dem weichen Klebstoff, um den weichen Klebstoff zu dosieren; und Aufbringen des dosierten weichen Klebstoffs aus dem Tiefdruckzylinder auf eine Trägerbahn.

Die US 5,716,687 A betrifft eine verbesserte schmelzbare Klebefolie zum Verbinden ausgewählter Materialteile, umfassend: eine wärmeempfindliche Klebeschicht mit einer ersten und einer zweiten gegenüberliegenden Oberfläche; eine erste Haftkleberschicht auf der ersten Oberfläche der wärmeempfindlichen Kleberschicht; eine zweite Haftkleberschicht auf der zweiten Oberfläche der wärmeempfindlichen Kleberschicht, wobei die erste und die zweite Haftkleberschicht die wärmeempfindliche Kleberschicht dazwischen einschließen, um einen Klebeschichtensatz zu bilden, wobei der erste und der zweite Haftklebstoff Schichten mit ausgewählten geometrischen Konfigurationen, die abwechselnde Bereiche von Haftklebstoff und Hohlräumen bilden, damit wärmeempfindlicher Klebstoff beim Schmelzen hindurchtreten kann, so dass die erste und die zweite Oberfläche der wärmeempfindlichen Klebstoffschicht die Materialabschnitte miteinander verbinden, wenn sich die Materialabschnitte in einer nebeneinander angeordneten Position befinden und der Klebstoffschichtsatz zwischen den Materialabschnitten angeordnet ist; eine erste Trennschicht, die lösbar an der ersten Haftkleberschicht angebracht ist; und eine zweite Trennschicht, die lösbar an der zweiten Haftkleberschicht angebracht ist, wobei die erste und die zweite Trennschicht die dazwischen angeordnete Kleberschicht einschließen.

Die Aufgabe der vorliegenden Erfindung ist es, ein Herstellverfahren von Haftklebeschichten bereitzustellen, das in industriellem Maßstab kostengünstig ist und welches einfach auf veränderte Formen oder Größen umgestellt werden kann.

Diese Aufgabe wird durch das Verfahren gemäß Anspruch 1, die Vorrichtung gemäß Anspruch 13 und die Verwendung gemäß Anspruch 14 gelöst. Vorteilhafte Ausführungsformen ergeben sich aus den Unteransprüchen.

Ein Verfahren zur Herstellung einer Haftklebeschicht umfasst die Schritte:
- Aufbringen einer vernetzbaren Polymerzusammensetzung in eine Kavität einer zumindest eine Kavität aufweisenden Druckwalze,
   Induzieren oder Bewirken einer Vernetzungsreaktion zur Erzeugung einer zumindest teilweise vernetzten Haftklebeschicht, und
- Entfernen der zumindest teilweise vernetzten Haftklebeschicht aus der Kavität.

Ein bevorzugtes Verfahren umfasst die Schritte des Aufbringens einer vernetzbaren Polymerzusammensetzung in eine Kavität einer zumindest eine Kavität aufweisenden Druckwalze, des zumindest teilweisen Abdeckens der die Polymerzusammensetzung enthaltenden Kavität mit einer Trägerfolie, des Induzierens oder Bewirkens einer Vernetzungsreaktion zur Erzeugung einer zumindest teilweise vernetzten Haftklebeschicht, und dem Entfernen der Trägerfolie von der Druckwalze, wobei die zumindest teilweise vernetzte Haftklebeschicht an der Trägerfolie haftet. Durch das Bewirken der Vernetzungsreaktion nach dem Abdecken der Polymerzusammensetzung mit der Trägerfolie kann während der Vernetzungsreaktion kein Umgebungssauerstoff an die Polymerzusammensetzung gelangen. Zudem kann durch das Haften der erzeugten Haftklebeschicht(en) an der Trägerfolie mit einfachen Mitteln eine fertige Rolle mit auf der Trägerfolie aufgebrachten Haftklebeelementen hergestellt werden.

Bevorzugt weist die Druckwalze einen zylindrischen Walzengrundkörper auf, an dessen Mantelfläche ein die zumindest eine Kavität aufweisender Überzug vorgesehen ist. Der Überzug kann dabei eine dünne Beschichtung des Walzenkörpers sein, um die Haftwirkung der Haftklebeschichten an der Walze zu reduzieren. Zusätzlich oder alternativ kann ein dickeres Material eine zylindrische Walze umgeben und in dieses Material können die Kavitäten zur Aufnahme der Haftklebeschichten eingebracht sein. Dies hat den Vorteil, dass bei einer Formänderung nur dieses zusätzliche Material ausgetauscht werden muss.

Nach einer bevorzugten Ausführungsform der Erfindung umfasst das Verfahren weiterhin die Schritte:
- Bereitstellen eines Bauteiles mit einer Oberfläche, die mit einer Haftklebeschicht zu versehen ist;
- Bestimmung des Umrisses der Oberfläche, die mit einer Haftklebeschicht zu versehen ist;
- Erzeugung mindestens einer Kavität auf der Druckwalze, wobei der Umriss der Kavität dem Umriss der Oberfläche, die mit einer Haftklebeschicht zu versehen ist, entspricht.

Dadurch können in besonders einfacher und ökonomischer Weise genau angepasste Haftklebeschichten in großer Stückzahl produziert werden. Die in der Kavität erzeugten Haftklebeschichten können z.B. direkt aus der Kavität oder über die Trägerfolie auf die mit der Haftklebeschicht zu versehende Oberfläche des Bauteils aufgebracht werden.

Grundsätzlich kann jede dem Fachmann geläufige vernetzbare Polymerzusammensetzung verwendet werden. Der Ausdruck "Polymerzusammensetzung" wird hierin gleichbedeutend mit "Polymermischung" verwendet. Solche Polymerzusammensetzungen bzw. Polymermischungen sind im Stand der Technik bekannt und kommerziell erhältlich. Die in die Kavität eingebrachte Polymerzusammensetzung kann in geeigneter Weise bezüglich der Viskosität voreingestellt werden, um ein unerwünschtes Herausfließen der Polymerzusammensetzung aus der Kavität vor dem eigentlichen Vernetzungsschritt zu verhindern. Auch eine teilweise Vorvernetzung zu Einstellung einer geeigneten Viskosität ist möglich.

Bevorzugt wird die Polymerzusammensetzung zur Vernetzung durch die Trägerfolie UV-bestrahlt. Die Bestrahlung ist ein bekanntes Mittel zur Erzeugung der Vernetzung und bietet vorliegend den besonderen Vorteil, dass die Strahlen weitgehend unbehindert durch die Trägerfolie dringen. Es kann aber grundsätzlich auch jedes andere dem Fachmann geläufige Mittel zur Erzeugung einer Vernetzung verwendet werden, beispielsweise thermische Energie oder eine Bestrahlung mit kürzeren Wellenlängen oberhalb und unterhalb des UV-Bereichs.

Weiter kann die Druckwalze zumindest teilweise aus einem UV-durchlässigen Material gefertigt sein und die Polymerzusammensetzung durch die Druckwalze hindurch mit UV-Strahlung bestrahlt werden. Hierdurch wird die Polymerzusammensetzung mit einer höheren und gleichmäßigeren UV-Intensität bestrahlt.

Alternativ und/oder zusätzlich kann durch aktive Zuführung von Wärme die Vernetzungsreaktion aktiviert oder unterstützt werden, um so die Vernetzungsreaktion zu beschleunigen. Dabei kann die Druckwalze beheizt werden und/oder neben der UV-Quelle kann eine Infrarotleuchte, bzw. -strahler vorgesehen sein.

Bei dem Verfahren beträgt die Grundfläche der zumindest einen Kavität vorzugsweise mindestens 4 cm², besonders vorzugsweise mindestens 10 cm², um auf diese Weise technische Bauteile für Klebe- und/oder Dichtzwecke zu erhalten.

Weiter kann die Tiefe der Kavität mindestens 50 µm, vorzugsweise mindestens 75 µm und insbesondere mindestens 100 µm betragen. Auch kann die Tiefe der Kavität weniger als 3000 µm und vorzugsweise weniger als 2500 µm betragen, so dass für unterschiedliche Anforderungen der Dicke die benötigten Komponenten herstellbar sind.

Bevorzugt findet bei der Herstellung der Haftklebeschicht kein Inertgas Verwendung. Dies ist deshalb nicht notwendig, da die Polymerzusammensetzung nach dem Aufbringen auf die Druckwalze schnellstmöglich mit der Trägerfolie abgedeckt wird, so dass Umgebungseinflüsse keine nennenswerte Oxidationsreaktion bewirken können.

Weiter kann nach dem Entfernen der Trägerfolie von der Druckwalze eine zweite UV-Bestrahlung vorgenommen werden. Dabei liegt vorzugsweise die Trägerfolie bei der zweiten UV-Bestrahlung derart auf einer zweiten Walze auf, dass die Trägerfolie sich zwischen den Haftklebeschichten und der zweiten Walze befindet. Hierdurch kann eine effektive Nachbehandlung der Haftklebeschicht(en) auf der Trägerfolie erreicht werden, da es möglich ist, ohne eine Durchdringung einer Trägerfolie oder eines Liners das auszuhärtende Material zu bestrahlen. Optional kann sich aber zu diesem Zeitpunkt auf der Oberseite der Haftklebeschichten auch eine zweite Liner- bzw. Oberschicht einer Folie befinden, die die Haftklebeschichten vor Umgebungseinflüssen schützt. Da diese Folie aber kaum mechanischen Belastungen ausgesetzt ist, kann sie sehr dünn ausgeführt sein und bildet einen entsprechend niedrigen Widerstand gegen die Durchleuchtung mit der UV-Bestrahlung.

Eine Vorrichtung zur Herstellung einer Haftklebeschicht weist eine Druckwalze auf, eine Vorrichtung zum Einbringen einer vernetzbaren Polymerzusammensetzung in zumindest eine Kavität der Druckwalze, eine Folienzuführvorrichtung zum Umschlingen der Druckwalzenmantelfläche mit einer Trägerfolie in einem definierten Umschlingungsbereich und eine UV-Strahlungsquelle zur Bestrahlung der Druckwalze innerhalb des Umschlingungsbereichs. Dies dient zum Induzieren oder Bewirken einer Vernetzungsreaktion von einer in der Kavität aufgenommenen Polymerzusammensetzung, um auf diese Weise die Haftklebeschichten herzustellen.

Bei der Verwendung einer Haftklebeeinheit weist eine Trägerfolie eine in einem Druckverfahren auf die Trägerfolie aufgebrachte Haftklebeschicht auf, wobei an den zu verklebenden Bauteilen eine Klebefläche definiert wird. Die Haftklebeschicht wird durch Kontakt mit der Klebefläche des einen zu verklebenden Bauteils aufgebracht, die Trägerfolie wird entfernt und das zweite zu verklebende Bauteil wird gegen die Haftklebeschicht gedrückt. Dabei entspricht der Umriss der mit dem Druckverfahren hergestellten Haftklebeschicht im Wesentlichen dem Umriss der Klebefläche. Das Druckverfahren ist eine Art von Tiefdruck. Die Größe der Haftklebeschicht wird durch den Druckvorgang bestimmt und nicht etwa durch einen nachfolgenden Schritt des Stanzens oder des Beschneidens.

Bei dieser Verwendung weist die zum Druck verwendete Druckwalze an der Mantelfläche einen Überzug auf, der mindestens eine Kavität enthält, deren Umriss im Wesentlichen dem Umriss der Klebefläche entspricht.

Die Walzenbreite kann beliebig im Hinblick auf die gewünschten Kavitäten gewählt werden. Als nicht beschränkendes Beispiel liegt eine übliche Walzenbreite z. B. zwischen 300 und 600 mm.

Bei einem hier offenbarten Klebeset mit zumindest zwei miteinander zu verklebenden Bauteilen und einer Haftklebeeinheit weist das Klebeset eine Trägerfolie und eine in einem Druckverfahren auf die Trägerfolie aufgebrachte Haftklebeschicht zur Verklebung der beiden Bauteile auf und an den Bauteilen ist eine zu verklebende Fläche definiert, und der Umriss der in dem Druckverfahren hergestellten Haftklebeschicht entspricht im Wesentlichen dem Umriss der zu verklebenden Fläche. Insbesondere ist die Haftklebeschicht einstückig und entspricht einstückig im Umriss der zu verklebenden Fläche.

Im Folgenden wird die Erfindung mit Bezug auf die Zeichnungen anhand von einer bevorzugten Ausführungsform beispielhaft beschrieben. Es zeigen:
- Fig. 1: eine schematische Darstellung des Herstellungsprozesses der Haftklebeschicht und
- Fig. 2: eine perspektivische Ansicht der Druckwalze.

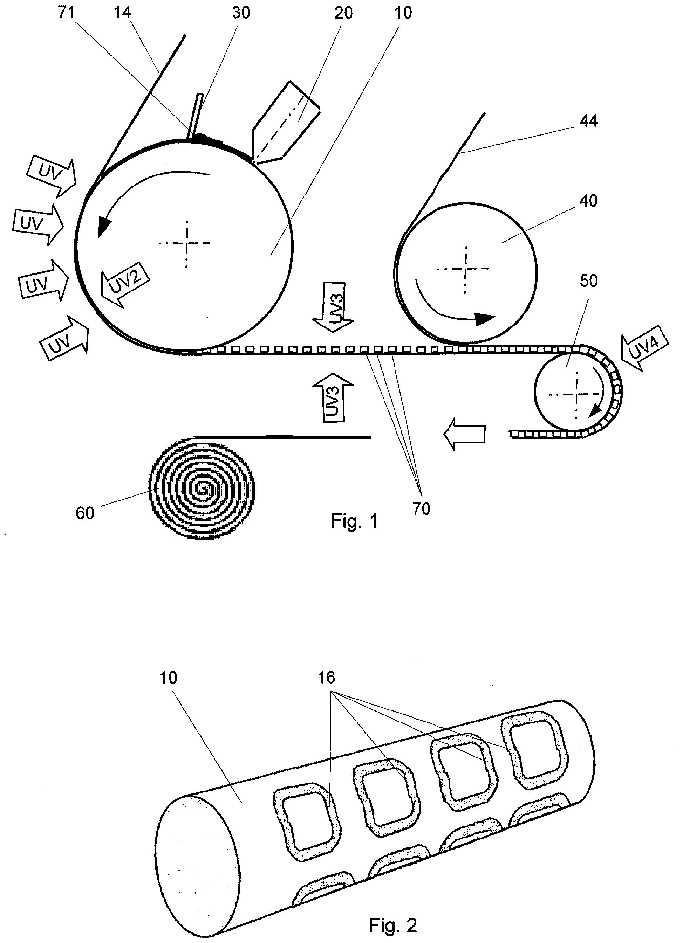

Fig. 1 zeigt eine seitliche Ansicht des Herstellungsprozesses. Zunächst wird aus einer Klebstoffdosiervorrichtung 20 eine nicht komplett polymerisierte aber polymerisierbare Kunststoffmischung, bzw. eine entsprechende Polymerzusammensetzung 71, auf eine Druckwalze 10 aufgetragen. Die Druckwalze weist an ihrer Mantelfläche eine Mehrzahl von Kavitäten 16 auf und die durch die Klebstoffdosiervorrichtung 20 aufgebrachte Kunststoff-, oder Monomermischung ist in ihrer Menge so bemessen, dass die Kavitäten 16 zumindest komplett gefüllt sind. Die Klebstoffdosiervorrichtung 20 ist in einem oberen Bereich der Druckwalze 10 angeordnet und erstreckt sich über die Länge der Druckwalze, so dass eine gleichmäßige Klebstoffverteilung erreicht wird. Die Druckwalze wird in dem kontinuierlichen Produktionsprozess mit einer gleichbleibenden Geschwindigkeit angetrieben. So wird die aufgebrachte Polymerzusammensetzung 71 zu einem feststehenden Rakel bewegt. Der Rakel erstreckt sich über die gesamte Druckwalzenlänge und streift, bzw. schabt überschüssige Polymerzusammensetzung ab, so dass nach dem Rakel die einzelnen Kavitäten komplett mit der Polymerzusammensetzung gefüllt sind und die kavitätsfreien Bereiche der Druckwalzenoberfläche frei von der Polymerzusammensetzung sind.

In der Folge werden die Kavitäten mit einer Trägerfolie abgedeckt. Hierzu wird die Trägerfolie 14 von einer Vorratsrolle (nicht dargestellt) bereitgestellt. Die Trägerfolie 14 ist eine Kunststofffolie, wie beispielsweise aus einem Thermoplasten wie Polypropylen oder Polyethylen. Wichtig ist, dass die Trägerfolie weitgehend UV-durchlässig ist. Die Trägerfolie 14 ist auf ihrer der Polymerzusammensetzung zugewandten Seite silikonisiert, um ein Abtrennen der polymerisierten Polymerzusammensetzung, also der Haftklebeschicht, zu ermöglichen. Die Bahn der Trägerfolie 14 wird von oben um die Druckwalze 14 gelenkt, so dass sich ein Umschlingungswinkel von knapp 160° ergibt. Nachfolgend wird die Trägerfolie 14 zu einer Umlenkwalze 50, wo ein Umschlingungswinkel von 180° besteht, geleitet und in der Folge wird die mit der Haftklebeschicht beschichtete Trägerfolie als Rolle auf eine Trommel 60 aufgewickelt. Die Rolle stellt das verkaufsfertige Produkt dar.

Die Polymerzusammensetzung 71 wird in einem mehrstufigen Herstellungsverfahren erzeugt. Zunächst wird aus 60 Gewichtsteilen 2-Ethylhexylacrylat, 34 Gewichtsteilen n-Butylacrylat, 6 Gewichtsteilen Acrylsäure und 0,01 Gewichtsteilen Irgacure 184 (1-Hydroxy-cyclohexylphenylketon) eine ca. 15%ige Polymer-Monomer-Lösung hergestellt. Diese Mischung wird mit UV-Lampen bestrahlt. Bei einer Wellenlänge von ca. 280 nm zerfällt der Fotoinitiator und die Reaktion wird gestartet. Beim Erreichen der Viskosität von ca. 2 Pa.s wird die Reaktion durch Abschalten der UV-Lampen abgebrochen.

Das so gewonnene Prepolymerisat wird anschließend mit 0,2 Gew.-% 1,6-HDDA (Hexandioldiacrylat) und 0,8 Gew.-% des Fotoinitiators Irgacure 1800 (73 Gew.-% 1-Hydroxy-cyclohexylphenylketon und 25 Gew.-% Bis(2,6-dimethoxybenzoyl)-2,4,4-trimethylpentylphosphinoxid) versetzt. Durch die Zugabe eines Reaktivverdünners (z. B. Isobornylacrylat) wird die Viskosität eingestellt und man erhält das dosierfähige, reaktive Polymer-Monomer-Gemisch, also die vernetzbare Polymerzusammensetzung, das unter Sauerstoffausschluss gelagert wird und über die Klebstoffdosiervorrichtung 20 dem Prozess der Herstellung der Haftklebeschicht zugeführt wird.

Radial außenliegend von der Trägerfolie 14 ist eine oder mehrere UV-Leuchten angeordnet, welche durch die Trägerfolie 14 hindurch die Polymerzusammensetzung bzw. Polymermischung bestrahlen und so die Polymerisationsreaktion initiieren und/oder bewirken. Ergänzend kann innerhalb der Druckwalze eine UV-Leuchte UV2 angeordnet sein. In diesem Fall ist die Druckwalze 10 aus einem UV-durchlässigen Kunststoff (oder Glas) hergestellt, so dass die in den Kavitäten befindliche Polymerzusammensetzung aufgrund auch dieser Bestrahlung reagieren kann.

Nachdem die Trägerfolie entlang der sich mit gleichmäßiger Geschwindigkeit drehenden Druckwalze 10 geführt wurde, sorgt die Trägerfolienführung dafür, dass sie sich von der Druckwalze abhebt. Durch die Bestrahlung ist die Polymerzusammensetzung ausreichend ausgehärtet, dass sie die Gegenform der Kavität angenommen hat und so hat sich die Haftklebeschicht gebildet. Die Oberfläche der Kavität ist abhäsiv beschichtet, so dass die Haftkräfte der Haftklebeschicht gegenüber der Oberfläche der Kavität minimiert sind. Somit haftet die Haftklebeschicht an der Trägerfolie und nicht an der Druckwalze und die einzelnen Teile der Haftklebeschicht werden aus ihren Kavitäten gezogen und bleiben an der Trägerfolie kleben.

Optional wird die Bahn der Trägerfolie 14 an einer zweiten Walze 40 vorbeigeführt, bei der eine zweite Schicht eines Liners oder einer Folie, nämlich die Oberschicht (Deckschicht) 44, auf die Oberseite der Haftklebeschicht 70 gelegt wird und sich mit ihr lösbar verklebt. Somit entsteht ein Sandwichaufbau mit der innenliegenden Haftklebeschicht 70 und den jeweils außen liegenden Folien des Liners 44 und der Trägerfolie 14. Diese Bahn wird über die Umlenkwalze 50 geleitet und von dort zu der Trommel 60 geführt, auf der das fertige Produkt aufgerollt wird.

Weiter kann optional in den Abschnitten zwischen der Druckwalze 10 und der Umlenkwalze 50 oder im Bereich der Umlenkwalze eine oder mehrere weitere UV-Leuchten angeordnet sein, wie Fig. 1 dies mit den Pfeilen UV3 und UV4 zeigt. Diese dienen dazu, die Festigkeit der bereits formsteifen Haftklebeschichten weiter zu erhöhen. Allerdings darf die Beleuchtung nicht zu stark sein, da bei einer übermäßigen Beleuchtung die Klebeigenschaften der Haftklebeschichten reduziert werden können.

Die Tiefe der Kavität beträgt bei einer beispielhaften Ausführungsform 80µm. Dicken von weniger als 50µm finden bevorzugt keine Verwendung, da das Füllen der Kavität und das Verbleiben der Polymerzusammensetzung in der Kavität beim Abschaben des überschüssigen Materials mit dem Rakel dann nicht sicher gewährleistet werden kann. Bei alternativen Ausführungsformen kann die Untergrenze der Schichtdicke 75 µm oder min. 100 µm betragen. Abhängig von unterschiedlichen Einflussfaktoren wie bspw. der Viskosität der Polymerzusammensetzung vor der Aushärtung kann die Untergrenze auch 200 µm, 300 µm oder 400 µm betragen. Eine Obergrenze beträgt 3000 µm, vorzugsweise 2500 oder 2000 µm, wobei diese Obergrenze von dem Vermögen des zumindest teilausgehärteten Kunststoffs abhängt, sich aus seiner Kavität der Druckrolle zu lösen.

Die Fläche der einzelnen Kavitäten kann in Bezug auf die Bauteilanforderungen sehr stark variieren. Bevorzugt beträgt die Fläche mindestens ca. 2 cm². Auch deutlich größere Teile sind möglich. Fig. 2 zeigt die Druckwalze 10 in einer perspektivischen Ansicht, wobei vier der umlaufend angeordneten Kavitäten sichtbar sind. Sie haben eine quadratische Außenform, die umlaufend geschlossen ist, wobei das Innere frei von Material ist. Eine derartige Haftklebeschicht kann bspw. verwendet werden, um zwei Gehäusehälften eines entsprechenden Bauteils miteinander zu verkleben. Die Walzenbreite der Druckwalze 10 beträgt 300 bis 600 mm.

Noch nicht ausgehärtete Polymermischungen neigen stark zu einer Oxidation. Aus diesem Grund wird bei dem genannten Stand der Technik gefordert, dass die Herstellung der Haftklebeschichten unter Sauerstoffausschluss stattfinden muss. Bei der beschriebenen Ausführungsform der Erfindung findet die UV-Bestrahlung hingegen erst nach der Abdeckung mit einer luftundurchlässigen Folie, nämlich der Trägerfolie 14, statt. Da hierdurch der Einfluss von Sauerstoff ausgeschlossen wird, bestehen keine besonderen Anforderungen an das Umgebungsmedium. Die noch nicht bestrahlte Polymerzusammensetzung hat lediglich Kontakt mit dem Umgebungsmedium in einer ersten Teilstrecke von der Dosiervorrichtung 10 zu dem Rakel 30 und in einer zweiten Teilstrecke von dem Rakel 30 bis zur Abdeckung mit der Trägerfolie 14. Die erste Teilstrecke ist in Bezug auf die Oxidation nicht kritisch, da für die Hafteigenschaften der Oxidationsgrad der Oberfläche relevant ist und da durch den Rakelbearbeitung anderes Material an die Außenoberfläche gebracht wird, werden ggf. teiloxidierte Bereiche in das Materialinnere verschoben, was nicht kritisch ist. Die zweite Teilstrecke ist relativ kurz und aufgrund des kontinuierlichen Produktionsprozesses ist der Kontakt der Polymerzusammensetzung mit der Umgebungsluft ausreichend kurz, um unzulässige Oxidationsvorgänge auszuschließen. Dies gilt insbesondere deshalb, weil die Trägerfolie 14 mit einer relativ hohen Fördergeschwindigkeit 2 m / min zugeführt wird, so dass der Luftkontakt der Polymerzusammensetzung in der zweiten Teilstrecke nur wenige Sekunden beträgt.

### Bezugszeichen:

- 10: Druckwalze
- 14: Trägerfolie, Liner
- 20: Klebstoffbehälter
- 30: Rakel
- 40: Zweite Walze
- 44: Zweiter, oberer Liner (Deckschicht)
- 50: Umlenkwalze
- 60: Trommel
- 70: Haftklebeschicht
- 71: Polymerzusammensetzung

## Patentansprüche

1. Verfahren zur Herstellung einer Haftklebeschicht (70), umfassend die folgenden Schritte:
- Aufbringen einer vernetzbaren Polymerzusammensetzung (71) in eine Kavität (16) einer zumindest eine Kavität aufweisenden Druckwalze (10),
Induzieren oder Bewirken einer Vernetzungsreaktion zur Erzeugung einer zumindest teilweise vernetzten Haftklebeschicht, und
- Entfernen der zumindest teilweise vernetzten Haftklebeschicht (70) aus der Kavität.

2. Verfahren nach Anspruch 1, wobei vor, während oder nach dem Induzieren oder Bewirken einer Vernetzungsreaktion zur Erzeugung einer zumindest teilweise vernetzten Haftklebeschicht die die Polymerzusammensetzung enthaltende Kavität zumindest teilweise mit einer Trägerfolie (14) abgedeckt wird, und die Trägerfolie (14) später von der Druckwalze (10) entfernt wird, wobei vorzugsweise die zumindest teilweise vernetzte Haftklebeschicht (70) an der Trägerfolie (14) haftet.

3. Verfahren gemäß Anspruch 1 oder 2, wobei die Druckwalze (10) einen zylindrischen Walzengrundkörper aufweist an dessen Mantelfläche ein die zumindest eine Kavität (16) aufweisender Überzug vorgesehen ist.

4. Verfahren gemäß einem der vorangegangenen Ansprüche, weiterhin umfassen die Schritte:
- Bereitstellen eines Bauteiles mit einer Oberfläche, die mit einer Haftklebeschicht zu versehen ist;
- Bestimmung des Umrisses der Oberfläche, die mit einer Haftklebeschicht zu versehen ist;
- Erzeugung mindestens einer Kavität auf der Druckwalze, wobei der Umriss der Kavität dem Umriss der Oberfläche, die mit einer Haftklebeschicht zu versehen ist, entspricht.

5. Verfahren gemäß einem der vorangegangenen Ansprüche, wobei die Polymerzusammensetzung (71) zur Vernetzung (14) UV-bestrahlt wird.

6. Verfahren gemäß einem der vorangegangenen Ansprüche, wobei das Induzieren oder Bewirken einer Vernetzungsreaktion durch UV-Bestrahlung der in der Kavität (16) befindlichen und mit einer Trägerfolie (14) abgedeckten Polymerzusammensetzung (71) bewirkt wird, vorzugsweise durch die Trägerfolie (14).

7. Verfahren gemäß einem der vorangegangenen Ansprüche, wobei die Druckwalze (10) zumindest teilweise aus einem UV-durchlässigen Material gefertigt ist und der Polymerzusammensetzung zur Vernetzung durch die Druckwalze UV-bestrahlt wird.

8. Verfahren gemäß einem der vorangegangenen Ansprüche, wobei durch aktive Zuführung von Wärme die Vernetzungsreaktion aktiviert oder unterstützt wird.

9. Verfahren gemäß einem der vorangegangenen Ansprüche, wobei die Grundfläche der zumindest einen Kavität (16) mindestens 4 cm², vorzugsweise mindestens 10 cm² beträgt.

10. Verfahren gemäß einem der vorangegangenen Ansprüche, wobei die Tiefe der Kavität mindestens 50 µm beträgt, vorzugsweise mindestens 75µm und insbesondere mindestens 100 µm und insbesondere die Tiefe der Kavität weniger als 3000 µm und vorzugsweise weniger als 2500 µm beträgt.

11. Verfahren gemäß einem der vorangegangenen Ansprüche, wobei bei der Herstellung der Haftklebeschicht kein Inertgas Verwendung findet.

12. Verfahren gemäß einem der vorangegangenen Ansprüche, wobei nach dem Entfernen der Trägerfolie (14) von der Druckwalze eine zweite UV-Bestrahlung vorgenommen wird, und wobei vorzugsweise die Trägerfolie (14) bei der zweiten UV-Bestrahlung derart auf einer zweiten Walze (50) aufliegt, dass die Trägerfolie (14) sich zwischen der Haftklebeschicht (70) und der zweiten Walze (50) befindet.

13. Vorrichtung zur Durchführung eines Verfahrens zur Herstellung einer Haftklebeschicht (70) gemäß einem der vorstehenden Ansprüche, mit einer Druckwalze (10), einer Vorrichtung (20) zum Einbringen einer vernetzbaren Polymerzusammensetzung in zumindest eine Kavität (16) der Druckwalze, einer Folienzuführvorrichtung zum Umschlingen der Druckwalzenmantelfläche mit einer Trägerfolie (14) in einem Umschlingungsbereich (α) und mit einer UV-Strahlungsquelle zur Bestrahlung der Druckwalze (10) innerhalb des Umschlingungsbereichs (α) und somit zur Induzierung oder Bewirkung einer Vernetzungsreaktion von in der Kavität aufgenommener Polymerzusammensetzung (71).

14. Verwendung einer Haftklebeeinheit, die eine Trägerfolie (14) und eine in einem Druckverfahren auf die Trägerfolie (14) aufgebrachte Haftklebeschicht (70) aufweist, zur Verklebung von zwei Bauteilen, wobei an den zu verklebenden Bauteilen eine Klebefläche definiert wird, die Haftklebeschicht durch Kontakt mit der Klebefläche des einen zu verklebenden Bauteils aufgebracht wird, die Trägerfolie entfernt wird und das zweite zu verklebende Bauteil gegen die Haftklebeschicht gedrückt wird, **dadurch gekennzeichnet, dass** der Umriss der mit dem Druckverfahren hergestellten Haftklebeschicht (70) im Wesentlichen dem Umriss der Klebefläche entspricht.

15. Verwendung gemäß Anspruch 14, wobei die zum Druck verwendete Druckwalze an der Mantelfläche einen Überzug aufweist, der mindestens eine Kavität (16) aufweist, deren Umriss im Wesentlichen dem Umriss der Klebefläche entspricht.

## Claims

1. A method for manufacturing an adhesive layer (70), comprising the following steps:
- applying a crosslinkable polymer composition (71) into a cavity (16) of a print roll (10) comprising at least one cavity,
- inducing or effecting a crosslinking reaction for generating an at least partially crosslinked adhesive layer, and
- removing the at least partially crosslinked adhesive layer (70) from the cavity.

2. The method according to claim 1, wherein before, during or after the step of inducing or effecting a crosslinking reaction for generating an at least partially crosslinked adhesive layer the cavity which contains the polymer composition is at least partially covered with a carrier foil (14), and later the carrier foil (14) is removed from the print roll (10), wherein preferably the at least partially crosslinked adhesive layer (70) adheres at the carrier foil (14).

3. The method according to claim 1 or 2, wherein the print roll (10) has a cylindrical roll base body, wherein on the lateral surface thereof a coating which comprises the at least one cavity (16) is provided.

4. The method according to one of the preceding claims, further comprising the steps:
- providing a component with a surface which has to be provided with an adhesive layer;
- determining the contour of the surface which has to be provided with an adhesive layer;
- creating at least one cavity on the print roll, wherein the contour of the cavity corresponds to the contour of the surface which has to be provided with an adhesive layer.

5. The method according to one of the preceding claims, wherein for crosslinking (14) the polymer composition (71) is UV irradiated.

6. The method according to one of the preceding claims, wherein the step of inducing or effecting a crosslinking reaction of the polymer composition (71) being present in the cavity (16) and being covered with a carrier foil (14) is effected by UV irradiation, preferably through the carrier foil (14).

7. The method according to one of the preceding claims, wherein the print roll (10) is manufactured at least partially from a UV transmissive material and for crosslinking the polymer composition is UV irradiated through the print roll.

8. The method according to one of the preceding claims, wherein the crosslinking reaction is activated or supported by active supply of heat.

9. The method according to one of the preceding claims, wherein the base area of the at least one cavity (16) is at least 4 cm², preferably at least 10 cm².

10. The method according to one of the preceding claims, wherein the depth of the cavity is at least 50 µm, preferably at least 75 µm and in particularly at least 100 µm, and in particularly the depth of the cavity is less than 3000 µm and preferably less than 2500 µm.

11. The method according to one of the preceding claims, wherein during the manufacturing of the adhesive layer no inert gas is used.

12. The method according to one of the preceding claims, wherein after the removal of the carrier foil (14) from the print roll a second UV irradiation is conducted, and wherein preferably the carrier foil (14) during the second UV irradiation rests on a second roll (50) such that the carrier foil (14) is arranged between the adhesive layer (70) and the second roll (50).

13. A device for conducting a method for manufacturing an adhesive layer (70) according to one of the preceding claims with a print roll (10), a device (20) for placing a crosslinkable polymer composition in at least one cavity (16) of the print roll, a foil feeding device for winding a carrier foil (14) around the lateral surface of the print roll in a winding area (α) and with a UV radiation source for irradiating the print roll (10) within the winding area (α) and thus for inducing or effecting a crosslinking reaction of polymer composition (71) being contained in the cavity.

14. The use of an adhesive unit, comprising a carrier foil (14) and an adhesive layer (70) being applied onto the carrier foil (14) in a printing process, for bonding two components together, wherein on the components which have to be bonded together an adhesive area is defined, the adhesive layer is applied by contact with the adhesive area of the one component which has to be bonded, the carrier foil is removed and the second component which has to be bonded is pressed against the adhesive layer, **characterized in that** the contour of the adhesive layer (70) which has been manufactured with the printing process substantially corresponds to the contour of the adhesive area.

15. The use according to claim 14, wherein the print roll which is used for printing comprises on the lateral surface a coating which comprises at least one cavity (16), wherein the contour thereof substantially corresponds to the contour of the adhesive area.

## Revendications

1. Procédé de fabrication d'une couche adhésive (70), comprenant les étapes suivantes :
- d'application d'une composition de polymère (71) réticulable dans une cavité (16) d'un cylindre d'impression (10) présentant au moins une cavité,
de provocation ou d'entraînement d'une réaction de réticulation pour produire une couche adhésive au moins en partie réticulée, et
- de retrait de la couche adhésive (70) au moins en partie réticulée hors de la cavité.

2. Procédé selon la revendication 1, dans lequel la cavité contenant la composition de polymère est au moins en partie recouverte d'un film de support (14) avant, pendant ou après la provocation ou l'entraînement d'une réaction de réticulation pour produire une couche adhésive au moins en partie réticulée, et le film de support (14) est retiré ultérieurement du cylindre d'impression (10), dans lequel de préférence la couche adhésive (70) au moins en partie réticulée adhère au film de support (14).

3. Procédé selon la revendication 1 ou 2, dans lequel le cylindre d'impression (10) présente un corps de base de cylindre cylindrique, au niveau de la face extérieure duquel est prévu un revêtement présentant l'au moins une cavité (16).

4. Procédé selon l'une quelconque des revendications précédentes, comprenant par ailleurs les étapes :
- de fourniture d'un composant avec une surface, qui est à pourvoir d'une couche adhésive,
- de définition du contour de la surface, qui est à pourvoir d'une couche adhésive ;
- de production d'au moins une cavité sur le cylindre d'impression, dans lequel le contour de la cavité correspond au contour de la surface, qui est à pourvoir d'une couche adhésive.

5. Procédé selon l'une quelconque des revendications précédentes, dans lequel la composition de polymère (71) est exposée à un rayonnement UV aux fins de la réticulation (14).

6. Procédé selon l'une quelconque des revendications précédentes, dans lequel la provocation ou l'entraînement d'une réaction de réticulation est entraînée ou entraîné par une exposition à un rayonnement UV de la composition de polymère (71) se trouvant dans la cavité (16) et recouverte d'un film de support (14), de préférence par le film de support (14).

7. Procédé selon l'une quelconque des revendications précédentes, dans lequel le cylindre d'impression (10) est confectionné au moins en partie à partir d'un matériau perméable aux UV et la composition de polymère est exposée à un rayonnement UV à travers le cylindre d'impression aux fins de la réticulation.

8. Procédé selon l'une quelconque des revendications précédentes, dans lequel la réaction de réticulation est activée ou soutenue par l'amenée active de chaleur.

9. Procédé selon l'une quelconque des revendications précédentes, dans lequel la face de base de l'au moins une cavité (16) est d'au moins 4 cm², de préférence d'au moins 10 cm².

10. Procédé selon l'une quelconque des revendications précédentes, dans lequel la profondeur de la cavité est d'au moins 50 µm, de préférence d'au moins 75 µm et en particulier d'au moins 100 µm, et en particulier la profondeur de la cavité est inférieure à 3 000 µm et de préférence inférieure à 2 500 µm.

11. Procédé selon l'une quelconque des revendications précédentes, dans lequel aucun gaz inerte ne trouve utilisation lors de la fabrication de la couche adhésive.

12. Procédé selon l'une quelconque des revendications précédentes, dans lequel après le retrait du film de support (14) du cylindre d'impression, une deuxième exposition à un rayonnement UV est réalisée, et dans lequel de préférence le film de support (14) repose lors de la deuxième exposition à un rayonnement UV sur un deuxième cylindre (50) de telle manière que le film de support (14) se trouve entre la couche adhésive (70) et le deuxième cylindre (50).

13. Dispositif de mise en œuvre d'un procédé de fabrication d'une couche adhésive (70) selon l'une quelconque des revendications précédentes, avec un cylindre d'impression (10), un dispositif (20) pour introduire une composition de polymère réticulable dans au moins une cavité (16) du cylindre d'impression, un dispositif d'amenée de film pour envelopper la face extérieure de cylindre d'impression d'un film de support (14) dans une zone d'enveloppement (α) et avec une source de rayonnement UV pour exposer à un rayonnement le cylindre d'impression (10) à l'intérieur de la zone d'enveloppement (α) et ainsi pour provoquer ou entraîner une réaction de réticulation de la composition de polymère (71) logée dans la cavité.

14. Utilisation d'une unité adhésive, qui présente un film de support (14) et une couche adhésive (70) appliquée dans un procédé d'impression sur le film de support (14), aux fins du collage de deux composants, dans laquelle est définie au niveau des composants à coller une face adhésive, la couche adhésive est appliquée par contact avec la face adhésive d'un composant à coller, le film de support est retiré et le deuxième composant à coller est pressé contre la couche adhésive, **caractérisée en ce que** le contour de la couche adhésive (70) fabriquée avec le procédé d'impression correspond sensiblement au contour de la face adhésive.

15. Utilisation selon la revendication 14, dans laquelle le cylindre d'impression utilisé aux fins de la pression présente au niveau de la face extérieure un revêtement, qui présente au moins une cavité (16), dont le contour correspond sensiblement au contour de la face adhésive.
